# EUROPÄISCHE PATENTSCHRIFT

(11) **EP 3 445 598 B1**
(45) Veröffentlichungstag und Bekanntmachung des Hinweises auf die Patenterteilung: **09.06.2021**
(21) Anmeldenummer: 17716203.9
(22) Anmeldetag: 06.04.2017
(51) Int. Cl.: B60G 17/06, B60G 17/08, B60G 17/018

(54) **STEUERVORRICHTUNG UND VERFAHREN ZUM REGELN EINER DÄMPFERHÄRTE EINES SCHWINGUNGSDÄMPFERS EINES KRAFTFAHRZEUGS**
CONTROL DEVICE AND METHOD FOR ADJUSTING THE DAMPER HARDNESS OF A VIBRATION DAMPER OF A MOTOR VEHICLE
DISPOSITIF DE COMMANDE ET PROCÉDÉ DE RÉGULATION DE LA DURETÉ D'AMORTISSEMENT D'UN AMORTISSEUR DE VIBRATIONS DANS UN VÉHICULE AUTOMOBILE

(30) Priorität: 19.04.2016 DE 102016206604
(43) Veröffentlichungstag der Anmeldung: 27.02.2019
(73) Patentinhaber: Volkswagen Aktiengesellschaft, 38440 Wolfsburg (DE)
(72) Erfinder: BÄRECKE, Frank, 38444 Wolfsburg (DE); KUKLA, Stefan, 29339 Wathlingen (DE)
(86) Internationale Anmeldenummer: PCT/EP2017/058284
(87) Internationale Veröffentlichungsnummer: WO 2017/182288

(56) Entgegenhaltungen:
- EP-A1- 3 006 238
- EP-A2- 2 052 885
- DE-A1- 4 116 839
- DE-A1- 4 323 552
- DE-A1-102014 208 323
- US-A- 5 483 448

## Beschreibung

Die Erfindung betrifft ein Verfahren und eine Steuervorrichtung zum Regeln einer Dämpferhärte eines Schwingungsdämpfers eines Rades eines Kraftfahrzeugs. Die Dämpferhärte wird in Abhängigkeit von zwei Sensorsignalen geregelt, von denen eines von einer Sensoreinheit an einem Aufbau des Kraftfahrzeugs und das zweite von einer Sensoreinheit, die eine Radbewegung des Rades erfasst, empfangen wird.

Ein solches Verfahren und eine solche Steuervorrichtung sind beispielsweise aus der DE 10 2013 219 588 A1 bekannt. Danach ist an einem Chassis eines Kraftfahrzeugs und an einem Rad desselben jeweils ein Beschleunigungssensor angeordnet, aus deren Sensorsignalen jeweils eine Geschwindigkeit berechnet wird. Hieraus wird dann ein Stellsignal zum Einstellen der Dämpferhärte erzeugt. Bei diesem Verfahren ist man darauf angewiesen, für alle Schwingungsfrequenzen einer Aufbaubewegung des Kraftfahrzeugs die Sensorsignale beider Sensoren zu nutzen, um daraus eine Relativgeschwindigkeit zwischen Chassis und Rad zu berechnen. Die Sensoren sind aber für unterschiedliche Schwingungsfrequenzen unterschiedlich gut geeignet.

Aus der DE 10 2014 208 323 A1 ist eine Regelung für eine Dämpferhärte eines Schwingungsdämpfers eines Kraftfahrzeugs bekannt, die als Sollwertsignal beispielsweise eine Geschwindigkeitsvorgabe für einen Aufbau des Kraftfahrzeugs empfangen kann. Ein Istwertsignal kann auf der Grundlage einer Radbeschleunigung, eines Höhenstandes der Räder, d.h. eines Einfederwegs der Schwingungsdämpfer, einer Aufbaubeschleunigung des Aufbaus und weiteren Sensorsignalen ermittelt werden. Es kann auch eine vorausschauende Anpassung der Fahrwerksdämpfung an zukünftig mit einzelnen Rädern in Kontakt stehenden Fahrbahnteilflächen erfolgen, wozu eine Fahrbahnoberflächenbeschaffenheit beispielsweise mittels einer Kamera erfasst werden kann. Auch bei diesem Verfahren wird nicht zwischen der unterschiedlichen Eignung der Sensorsignale beim Regeln der Dämpferhärte unterschieden.

Aus der DE 10 2015 205 369 A1 ist eine Regelung für eine Dämpferhärte eines Schwingungsdämpfers bekannt, welche ein vorausliegendes Höhenprofil einer Fahrbahn vor dem Kraftfahrzeug berücksichtigt. Hierzu wird ein vorausliegender Fahrbahnabschnitt beispielsweise gefilmt und daraus dann das Höhenprofil ermittelt. Hierdurch können Informationen ergänzt werden, welche einen Schwingungsdämpfer noch nicht direkt, sondern erst zukünftig betreffen werden.

Zum Erfassen einer aktuellen Bewegungsgeschwindigkeit eines Aufbaus des Kraftfahrzeugs können in der beschriebenen Weise also zwei unterschiedliche Sensoreinheiten verwendet werden, eine am Aufbau selbst zum Erfassen von dessen Beschleunigung und eine an einem Rad zum Erfassen einer Radbewegung, die von dem Rad unabhängig vom Aufbau ausgeführt werden kann, indem eine Relativbewegung durch den Schwingungsdämpfers des Rades ermöglicht ist. Eine andere Bezeichnung für Schwingungsdämpfers ist auch Dämpferbein oder Federbein oder Fahrwerksdämpfer.

Die Verwendung beider Sensoreinheiten kann Probleme ergeben. Fährt ein Kraftfahrzeug beispielsweise über ein Schlagloch, so wird das Rad kurzzeitig ruckartig bezüglich des Aufbaus des Kraftfahrzeugs nach unten hin vom Aufbau weg ausgelenkt. Der Aufbau selbst führt hierbei in der Regel keine signifikante Bewegung in Reaktion auf das Schlagloch aus. Somit muss diese Relativbewegung des Rades beim Einstellen der Dämpferhärte ignoriert werden, da sie keine Regelung der Bewegung des Aufbaus erforderlich macht. Entsprechend muss das Sensorsignal einer am Rad angeordneten oder mit dem Rad mit bewegten Sensoreinheit angemessen verarbeitet werden.

Andersherum ergibt sich beispielsweise bei einer Bergauffahrt keine Relativbewegung zwischen dem Rad und dem Aufbau, sodass die Sensoreinheit am Rad keine relevante Relativbewegung bezüglich des Aufbaus signalisiert. Dagegen signalisiert eine aufbaufeste Sensoreinheit eine durchgehende, lang anhaltende Aufwärtsbewegung, die aber ebenfalls zu ignorieren ist, da sich das Kraftfahrzeug insgesamt nach oben bewegt und für diese Bewegung eine Veränderung der Dämpferhärte keinen Sinn macht. Entsprechend muss also auch ein Sensorsignal einer aufbaufesten Sensoreinheit in diesem Fall angepasst verarbeitet werden.

In dem den Oberbegriff des Anspruchs 1 offenbarende Dokument DE 41 16 839 A1 ist eine Skyhook-Regelung für ein Dämpfersystem eines Kraftfahrzeugs beschrieben, wobei für eine Verbesserung der Regelung berücksichtigt wird, dass der Beschleunigungssensor zum Messen der Beschleunigung des Aufbaus für niederfrequenten Bereiche unzureichende Signale liefert, weshalb für diese Bereiche zusätzlich der Einfederweg von Schwingungsdämpfern des Dämpfersystems berücksichtigt wird.

Aus dem Dokument DE 43 23 552 A1 ist bekannt, ein Signal eines Sensors für einen Einfederweg eines Schwingungsdämpfers mit als eines Tiefpassfilters zu filtern.

Aus dem Dokument DE 10 2014 208323 A1 ist bekannt, für eine Regelung eines Dämpfersystems auch eine Vorausschau, Preview, zu nutzen, um einen bevorstehenden Fahrbahnverlauf zu berücksichtigen. Um eine Bewegungsgeschwindigkeit eines Dämpfers zu ermitteln, können Fahrzeug- und Sensorgrößen ausgewertet werden.

Aus den Dokument US 5 483 448 A ist bekannt, beim Regeln einer Dämpferhärte eine Kostenfunktion zu verwenden, die den Einfederweg, die Beschleunigung des Aufbaus und die verwendete elektrische Leistung beachtet.

Die EP 3 006 238 A1 beschreibt ein Aufhängungssystem für ein Kraftfahrzeug mit einem Stoßdämpfer, wobei eine Dämpfungsgeschwindigkeit in Abhängigkeit von einer Bedienhandlung eines Kraftfahrzeugführers eingestellt wird. So soll ein sich für den Kraftfahrzeugführer angemessen anfühlendes Fahrerlebnis erzeugt werden.

Die EP 2 052 885 A2 beschreibt Verfahren und System zur Beeinflussung der Bewegung eines in seinen Bewegungsabläufen steuerbaren oder regelbaren Fahrzeugaufbaus eines Kraftfahrzeuges. Konkret wird ein auf einer Aufbaugeschwindigkeit basierender Regelkreis vorgeschlagen, wobei in diesem ein Soll-Aufbaugeschwindigkeitswert 0 beträgt und ein IstWert der Aufbaugeschwindigkeit einer Regeldifferenz entspricht.

Der Erfindung liegt die Aufgabe zugrunde, für eine Regelung einer Dämpferhärte eines Schwingungsdämpfers eines Kraftfahrzeugrades eine zuverlässige Schätzung der Bewegungsgeschwindigkeit des Aufbaus in vertikaler Richtung bereitzustellen.

Die Aufgabe wird durch die Gegenstände der unabhängigen Patentansprüche gelöst. Vorteilhafte Weiterbildungen der Erfindung sind durch die Merkmale der der abhängigen Patentansprüche, die folgende Beschreibung sowie die Figuren offenbart.

Durch die Erfindung ist ein Verfahren zum Regeln einer Dämpferhärte eines Schwingungsdämpfers eines Rades eines Kraftfahrzeugs bereitgestellt. Das Verfahren kann durch eine Steuervorrichtung des Kraftfahrzeugs durchgeführt werden. Aus einem ersten Sensorsignal einer ersten Sensoreinheit wird ein Aufbaubewegungssignal erzeugt. Die erste Sensoreinheit ist bewegungsfest mit einem Aufbau des Kraftfahrzeugs verbunden, also beispielsweise an einem Rahmen oder Chassis des Kraftfahrzeugs befestigt. Als erstes Sensorsignal kann beispielsweise ein Beschleunigungssignal eines Beschleunigungssensors empfangen werden, welcher die Beschleunigung des Aufbaus in vertikaler Richtung erfasst. Durch mathematisches Integrieren des Sensorsignals kann dann das besagte Aufbaubewegungssignal erzeugt werden.

Aus einem zweiten Sensorsignal einer zweiten Sensoreinheit wird ein Radbewegungssignal erzeugt. Die zweite Sensoreinheit erfasst eine Radposition des Rades bezüglich des Aufbaus. Als das zweite Sensorsignal kann beispielsweise ein Wegsignal eines Radwegsensors empfangen werden, der einen Einfederweg des Schwingungsdämpfers erfasst. Der Einfederweg beschreibt beispielsweise eine relativ Position eines Kolbens des Schwingungsdämpfers bezüglich eines Zylinders des Schwingungsdämpfers, in welchem der Kolben bewegbar angeordnet ist.

Auf der Grundlage des Aufbaubewegungssignals und des Radbewegungssignals wird ein Geschwindigkeitssignal erzeugt, welches die Geschwindigkeit des Aufbaus beschreibt. In Abhängigkeit von dem Geschwindigkeitssignal wird dann ein Stellsignal zum Einstellen der Dämpferhärte erzeugt. Mittels des Stellsignals kann in an sich bekannter Weise beispielsweise ein Stellventil des Schwingungsdämpfers angesteuert werden.

Durch die Sensorsignale der beschriebenen Sensoreinheiten könnten sich die eingangs beschriebenen Probleme z.B. beim Durchfahren eines Schlagloch einerseits und bei einem Bergauffahrt andererseits ergeben. Um diese Probleme zu vermeiden, ist erfindungsgemäß vorgesehen, dass das Aufbaubewegungssignal mittels einer ersten Filtereinheit, die eine Hochpasscharakteristik oder eine Bandpasscharakteristik aufweist, gefiltert wird. Zusätzlich oder alternativ dazu ist vorgesehen, dass das Radbewegungssignal mittels einer zweiten Filtereinheit gefiltert wird, die eine Tiefpasscharakteristik aufweist. Mit anderen Worten ergibt sich hierdurch, dass das Geschwindigkeitssignal, welches insgesamt die Aufbaubewegung beschreibt, in einem vorbestimmten Hochfrequenzbereich ganz oder überwiegend aus dem Aufbaubewegungssignal und/oder in einem vorbestimmten Tieffrequenzbereich ganz oder überwiegend aus dem Radbewegungssignal gebildet oder erzeugt wird. Im Hochfrequenzbereich ergibt also eine prozentuale Änderung des Aufbaubewegungssignals eine größere Veränderung des resultierenden Geschwindigkeitssignals als eine gleichgroße prozentuale Veränderung des Radbewegungssignals. Umgekehrt ergibt eine prozentuale Änderung des Radbewegungssignals im Tieffrequenzbereich eine größere relative Änderung des Geschwindigkeitssignals als eine gleichgroße prozentuale Änderung des Aufbaubewegungssignals. Das gefilterte Aufbaubewegungssignal und das gefilterte Radbewegungssignal können dann zu dem besagten Geschwindigkeitssignal, das die Aufbaugeschwindigkeit angibt, kombiniert werden.

Erfindungsgemäß ist es vorgesehen, dass das Stellsignal auf der Grundlage einer Kostenfunktion erzeugt wird. Durch die Kostenfunktion wird hierbei ein Ruck im Aufbau des Kraftfahrzeugs dahingehend bewertet, inwieweit sich der Ruck auf einen Komfortwert einerseits und einen Fahrsicherheitswert und/oder einen resultierenden Einfederweg des Schwingungsdämpfers andererseits auswirkt. Der Ruck stellt die zeitliche Ableitung der Aufbaubeschleunigung dar. Mit anderen Worten werden der Abweichung oder dem Unterschied von der Sollgeschwindigkeit virtuelle Kosten zugeordnet. Kostenfunktionen sind an sich ein Standardinstrument in der Regelungstechnik, sodass dem Fachmann die Auslegung oder Ausgestaltung einer solchen Kostenfunktion mit Mitteln aus dem Stand der Technik möglich ist. Die Kostenfunktion ermöglicht im Regler, den Komfort oder umgekehrt den Diskomfort durch den aktuellen Dämpfereingriff gegen den Diskomfort durch eine falsche Aufbaugeschwindigkeit abzuwiegen, wenn beispielsweise der Schwingungsdämpfers in Anschlag geht. Mittels der Kostenfunktion kann somit ein gemeinsames Optimum gefunden werden, welches den Komfort bei der Aufbaubewegung einerseits und die Fahrsicherheit und/oder die Einfederung des Schwingungsdämpfers andererseits gegeneinander aufwiegt. Notwendig kann dies z.B. werden, wenn eine sehr starke Einfederung auf unebenem Untergrund zu einer Verletzung der Bodengrenzfläche führen kann, also z.B. in der beschriebenen Weise der Schwingungsdämpfers in Anschlag geht.

Die beschriebene Kostenfunktion ist geschwindigkeitsabhängig, so das z.B. für eine erste Fahrgeschwindigkeit dem Komfortwert ein größerer Einfluss gegeben wird als bei einer höheren zweiten Fahrgeschwindigkeit, bei welcher dem Fahrsicherheitswert und/oder dem Wert des Einfederwegs mehr Einfluss als bei der ersten Fahrgeschwindigkeit zugeordnet wird.

Durch die Erfindung ergibt sich der Vorteil, dass die Radbewegung, wie sie durch die zweite Sensoreinheit beispielsweise als Radweg erfasst wird, ideal für die Erkennung einer niederfrequenten oder langweiligen Aufbaubewegung genutzt wird, während zugleich das Problem behoben wird, dass die Bindung der Aufbaubewegung an die Straße über die Verwendung eines Radwegsensors bei einer Radbewegung im Hochfrequenzbereich ignoriert oder unterdrückt wird. Somit wird die Sensoreinheit nur für diejenigen Bewegungsfrequenzen genutzt, für die sie ein aussagekräftiges Sensorsignal bereitstellt.

Zugleich kann das Sensorsignal der ersten Sensoreinheit in dem jeweiligen Frequenzbereich entsprechend skaliert werden, um für alle Frequenzen ein aussagekräftiges Geschwindigkeitssignal der Aufbaubewegung zu erhalten.

Durch das Stellen der Dämpferhärte wird eine Vertikalgeschwindigkeit des Aufbaus eingeregelt. Mit anderen Worten wird mittels des Stellsignals die Vertikalgeschwindigkeit des Aufbaus auf einen aktuellen Wert eines Sollwertsignals eingeregelt. Das Geschwindigkeitssignal des Aufbaus wird hierbei als ein Istwertsignal für die Regelung verwendet. Es ist in der beschriebenen Weise besonders zuverlässig als eine Beschreibung der tatsächlichen Geschwindigkeit des Aufbaus nutzbar, da sowohl eine Bergauffahrt als auch eine Fahrt durch ein Schlagloch keinen falschen Wert für die aktuelle Aufbaugeschwindigkeit verursachen.

Bevorzugt ist vorgesehen, dass eine Grenzfrequenz der zweiten Filtereinheit, also des Tiefpassfilters, kleiner als eine untere Grenzfrequenz der ersten Filtereinheit, also des Hochpassfilters oder Bandpassfilters, ist. Die Grenzfrequenz kann beispielsweise in an sich bekannter Weise als die -3dB-Grenze (minus 3 dB) definiert sein. Eine alternative Bezeichnung für Grenzfrequenz ist Eckfrequenz oder Cut-off-Frequenz. Durch diese Weiterbildung sind die Einflüsse des Aufbaubewegungssignals und des Radbewegungssignals auf das resultierende Geschwindigkeitssignal des Aufbaus überschneidungsfrei oder zumindest überwiegt stets der Einfluss eines der beiden Signale.

Die Grenzfrequenz der zweiten Filtereinheit, also des Tiefpassfilters, liegt dabei bevorzugt in einem Bereich von 0,5 Hz bis 5 Hz. Unterhalb dieser Grenzfrequenz, also in einem Bereich von 0 Hz bis zur Grenzfrequenz hat sich das Sensorsignal eines Radwegsensors als besonders zuverlässig zum Unterscheiden zwischen z.B. einer Bergauffahrt einerseits und einer tatsächlichen Wankbewegung oder Nickbewegung des Kraftfahrzeugs andererseits erwiesen.

In dem Bereich zwischen den Grenzfrequenzen der beiden Filtereinheiten ergibt sich ein Übergangsbereich. Bei diesem ist besonders bevorzugt vorgesehen, dass zwischen dem jeweiligen Betragsgang der ersten. Filtereinheit und der zweiten Filtereinheit übergeblendet wird. Somit geht also graduell mit steigender Bewegungsfrequenz f der Einfluss von der zweiten Sensoreinheit, also beispielsweise des Radwegsensors, hin zur ersten Sensoreinheit, also beispielsweise eines Aufbau-Beschleunigungssensors, übergeblendet.

Das Sollwertsignal wird bevorzugt anhand eines Höhenprofils eines vor dem Kraftfahrzeug liegenden Fahruntergrunds festgelegt. Das Höhenprofil kann in der eingangs beschriebenen Weise mittels einer Erfassungseinheit erzeugt werden, die beispielsweise den vorausliegenden Fahruntergrund filmen und auf Grundlage beispielsweise einer Bildanalyse das Höhenprofil aus Bilddaten ermitteln kann.

Aus einem Unterschied zwischen dem Istwertsignal und dem Sollwertsignal kann dann das Stellsignal ermittelt werden. Bei dem Unterschied kann es sich beispielsweise um eine Differenz handeln, die dann beispielsweise mittels eines PID-Reglers in das Stellsignal umgerechnet werden kann.

Um das erfindungsgemäße Verfahren durchzuführen, ist durch die Erfindung auch eine Steuervorrichtung für einen oder mehrere Schwingungsdämpfer eines jeweiligen Rads eines Kraftfahrzeugs bereitgestellt, mittels welcher die jeweilige Dämpferhärte jedes Schwingungsdämpfers eingestellt wird. Die Steuervorrichtung ist dazu eingerichtet, ein erstes Sensorsignal einer ersten, bewegungsfest mit einem Aufbau des Kraftfahrzeugs verbundenen Sensoreinheit und pro Rad ein zweites Sensorsignal einer zweiten, eine Radposition bezüglich des Aufbaus erfassenden Sensoreinheit zu empfangen. Zusätzlich ist die Steuervorrichtung dazu eingerichtet, pro Rad ein Stellsignal zum Einstellen der Dämpferhärte an den jeweiligen Schwingungsdämpfer des Rads auszugeben. Die Steuervorrichtung weist hierzu erfindungsgemäß eine Prozessoreinrichtung auf, die beispielsweise einen Mikrocontroller und/oder einen Mikroprozessor aufweisen kann. Die erfindungsgemäße Steuervorrichtung ist dazu eingerichtet, pro Rad eine Ausführungsform des erfindungsgemäßen Verfahrens durchzuführen.

Schließlich gehört zu der Erfindung auch ein Kraftfahrzeug, welches in bekannter Weise Räder mit einem Schwingungsdämpfer aufweist, deren Dämpferhärte einstellbar ist. Des Weiteren umfasst das Kraftfahrzeug die beschriebene erste Sensoreinheit, welche bewegungsfest mit dem Aufbau des Kraftfahrzeugs verbunden ist, sowie pro Rad jeweils eine zweite Sensoreinheit, die eine Radposition des Rades bezüglich des Aufbaus erfasst. Schließlich weist das erfindungsgemäße Kraftfahrzeug eine Ausführungsform erfindungsgemäßen Steuervorrichtung auf.

Das erfindungsgemäße Kraftfahrzeug ist bevorzugt als Kraftwagen, insbesondere als Personenkraftwagen oder Lastkraftwagen, ausgestaltet. Das Kraftfahrzeug kann aber auch beispielsweise als Flurförderzeug ausgestaltet sein.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer Ausführungsform der erfindungsgemäßen Steuervorrichtung;
- Fig. 3: ein Diagramm mit schematisierten Verläufen von Betragsgängen zweier Filtereinheiten; und
- Fig. 4: eine schematische Darstellung einer alternativen Ausführungsform der erfindungsgemäßen Steuervorrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

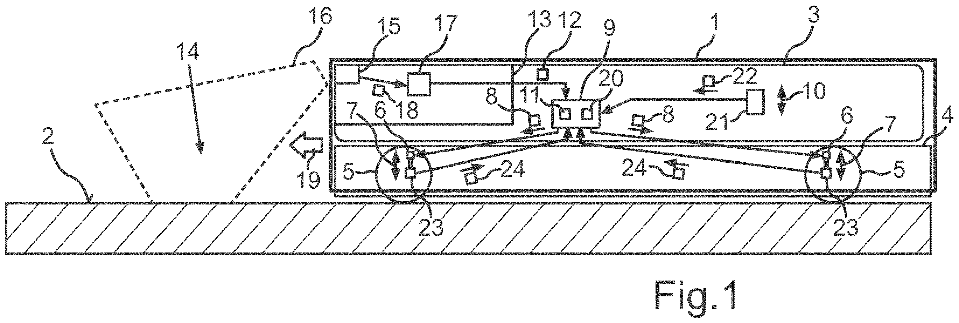

Fig. 1 zeigt ein Kraftfahrzeug 1, welches in dem veranschaulichten Beispiel gerade über einen Fahruntergrund 2, z.B. eine Straße, fahren kann. Das Kraftfahrzeug 1 kann einen Rahmen oder Aufbau 3 aufweisen, der in bekannter Weise federnd auf einem Fahrwerk 4 des Kraftfahrzeugs 1 gelagert sein kann. Die federnde Lagerung kann erreicht sein, indem Räder 5 des Kraftfahrzeugs 1 über ihre Schwingungsdämpfer 6 in an sich bekannter Weise mit dem Aufbau 3 verbunden sind. Durch die Schwingungsdämpfer 6 ist eine Relativbewegung 7 zwischen den Rädern 5 einerseits und dem Aufbau 3 andererseits möglich.

Die Schwingungsdämpfer 6 können bei dem Kraftfahrzeug 1 aktiv ausgestaltet sein, d.h. eine Dämpferhärte oder Dämpfungskraft der Schwingungsdämpfer 6 kann mittels eines Stellsignals 8 einstellbar sein. Das Stellsignal 8 kann durch eine Steuervorrichtung 9 erzeugt sein, welche beispielsweise als ein Steuergerät des Kraftfahrzeugs 1 ausgestaltet sein kann. Die Steuervorrichtung 9 kann die Dämpferhärte in der Weise einregeln, dass eine Vertikalbewegung 10 des Aufbaus 3 auf ein Sollwertsignal 11 eingeregelt wird.

Das Sollwertsignal 11 kann auf der Grundlage eines Höhenprofils 12 erzeugt werden, welches durch eine Erfassungseinrichtung 13 erfasst werden kann. Das Höhenprofil 12 kann einen vorausliegenden Straßenabschnitt 14 des Fahruntergrunds 2, den das Kraftfahrzeug 1 zukünftig überfahren oder überrollen wird, beschreiben. Hierzu kann beispielsweise eine Kamera 15 mit ihrem Erfassungsbereich 16 den vorausliegenden Straßenabschnitt 14 filmen. Eine Analyseeinrichtung 17 der Erfassungseinrichtung 13 kann aus Bilddaten 18 der Kamera 15 in an sich bekannter Weise das Höhenprofil 12 erzeugen. Die Analyseeinrichtung 17 kann hierzu eine Prozessoreinrichtung aufweisen, welche ein Bildanalyseprogramm ausführt. Eine Möglichkeit zur Ermittlung des Sollwertsignals für die Vertikalgeschwindigkeit 10 ist eine Strecke oder ein Straßenabschnitt 14 derjenigen Länge, die der halben Aufbaueigenfrequenz entspricht, wobei ein Sollwert für eine Vertikalgeschwindigkeit der Vertikalbewegung 10 als Quotient von Höhenänderung und Zeit ermittelt werden kann. Die Strecke ergibt sich somit in Abhängigkeit von der Aufbaueigenfrequenz und einer Fahrgeschwindigkeit 19 des Kraftfahrzeugs 1.

Zum Ermitteln eines Istwertsignals 20 der Vertikalbewegung 10 kann die Steuervorrichtung 9 von einer ersten Sensoreinheit 21 ein Sensorsignal 22 empfangen. Die Sensoreinheit 21 kann ein Beschleunigungssensor sein, der an dem Aufbau 3 befestigt ist. Entsprechend stellt das Sensorsignal 22 ein Beschleunigungssignal dar.

Des Weiteren kann an den Rädern 5 jeweils eine zweite Sensoreinheit 23 bereitgestellt sein, welche ein jeweiliges zweiten Sensorsignal 24 erzeugt. Jede Sensoreinheit 23 kann jeweils beispielsweise ein Radwegsensor sein, wobei dann das Sensorsignal 24 einen Einfederweg der Schwingungsdämpfer 6 beschreibt.

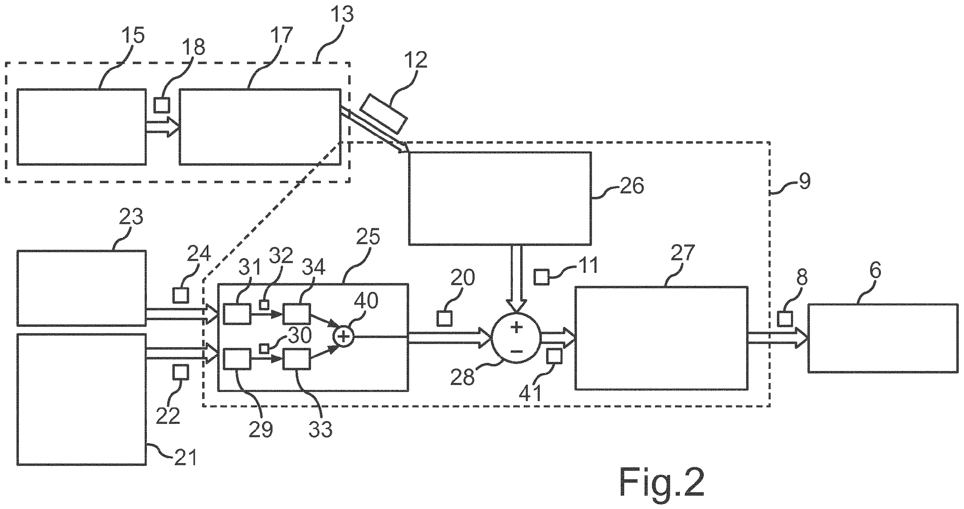

Fig. 2 veranschaulicht, wie die Steuervorrichtung 9 aus dem Höhenprofil 12 und den Sensorsignalen 22, 24 für ein einzelnes Rad 5 das jeweilige Stellsignal 8 zum Stellen einer Dämpferhärte in dem Schwingungsdämpfer 6 erzeugt.

Die Steuervorrichtung 9 kann eine Schätzeinrichtung 25, eine Sollwertermittlung 26, eine Regelungsverstärkung 27 und eine Unterschiedsermittlung 28 aufweisen. Bei den genannten Elementen 25 - 28 kann es sich jeweils beispielsweise um ein Softwaremodul oder Programmodul der Steuervorrichtung 9 handeln. Die Schätzungsrichtung 25 kann beispielsweise aus dem Sensorsignal 22, welches die Aufbaubeschleunigung beschreibt, mittels einer mathematischen oder numerischen Integration 29 ein Aufbaubewegungssignal 30 erzeugen. Aus den Sensorsignal 24, also beispielsweise dem Einfederweg, kann beispielsweise mittels einer mathematischen oder numerischen Ableitung 31 ein Radbewegungssignal 32 erzeugt werden.

Die Steuervorrichtung 9 kann für das Aufbaubewegungssignal 30 eine erste Filtereinheit 33 und für das Radbewegungssignal 32 eine zweite Filtereinheit 34 aufweisen.

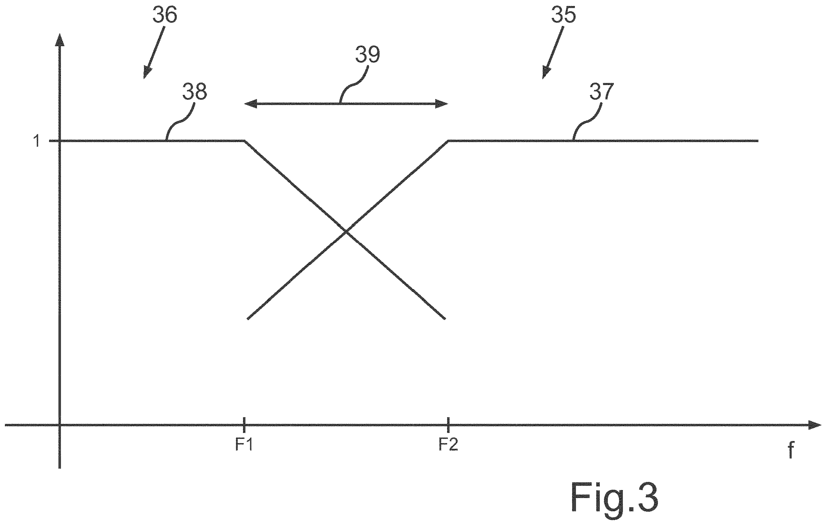

Fig. 3 veranschaulicht jeweilige Filtercharakteristiken 35, 36 über einer Frequenz f. Dargestellt sind jeweilige Betragsgänge 37, 38. Die Betragsgänge 37, 38 sind in Fig. 3 dahingehend normiert dargestellt, dass eine Einheitsverstärkung hier mit dem Wert 1 angegeben ist. Die Filtercharakteristik 35 der Filtereinheit 33 kann eine Hochpasscharakteristik mit einer unteren Grenzfrequenz F2 aufweisen. Die Filtercharakteristik 36 der Filtereinheit 34 kann eine Tiefpasscharakteristik mit einer Grenzfrequenz F1 aufweisen. Die Grenzfrequenz F1 ist kleiner als die Grenzfrequenz F2. Somit ergibt sich ein Übergangsbereich 39, in welchem die Betragsgänge 37, 38 übergeblendet werden können. Die Grenzfrequenz F1 kann einen Frequenzwert f in einem Bereich von beispielsweise 0,5 Hz bis 5 Hz aufweisen.

Die gefilterten Bewegungssignale 30, 32 können in einer Überlagerung 40 kombiniert werden, woraus sich das Istwertsignal 20 als Aufbaubewegungssignal ergibt. Die Überlagerung 40 kann z.B. eine Addition der gefilterten Bewegungssignale 30, 32 sein.

Ein durch die Unterschiedsermittlung 28 ermittelter Unterschied zwischen dem Sollwertsignal 11 und dem Istwertsignal 20 stellt eine Regelabweichung 41 dar und kann durch die Regelungsverstärkung 27 beispielsweise mittels eines PID-Reglers in das Stellenwertsignal 8 umgerechnet oder umgewandelt werden.

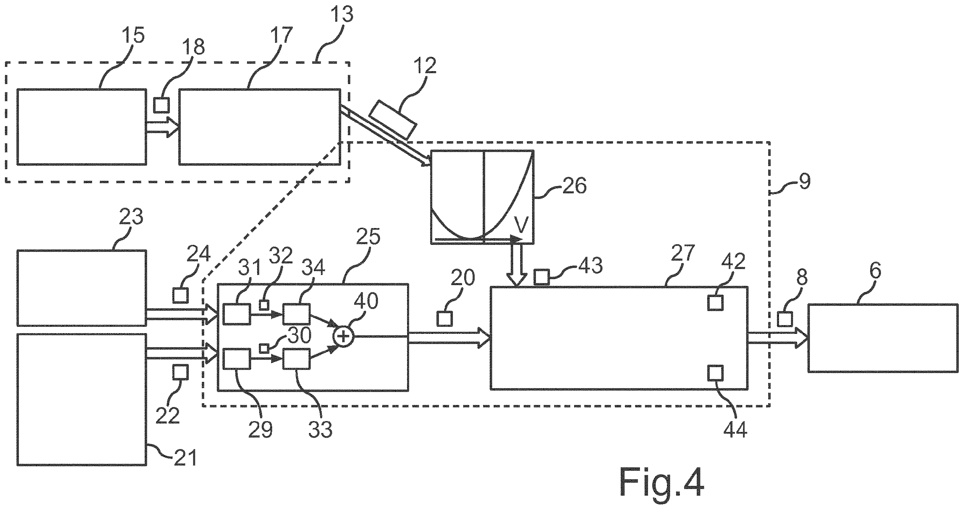

Fig. 4 veranschaulicht eine alternative Ausführungsform, bei welcher ein aktueller Wert V der Fahrgeschwindigkeit 19 beim Ermitteln des Sollwertsignals durch die Sollwertermittlung 26 berücksichtigt wird. Die Erzeugung des Stellsignals 8 kann dann auf der Grundlage einer Kostenfunktion 42 erfolgen, wobei in Abhängigkeit von dem Höhenprofil 12 und der Fahrgeschwindigkeit 19 durch die Sollwertermittlung 26 ein zu erwartender oder hinzunehmender Diskomfort beispielsweise durch einen Komfortwert 43 vorgegeben werden kann, der aufgrund der Fahrgeschwindigkeit 19 bei gegebenen Höhenprofil 12 hinzunehmen ist. Diesem Komfortwert 43 kann ein für unterschiedliche Werte der Dämpferhärte zu erwartender Einfederweg 44 entgegengestellt werden. Über eine Kostenfunktion 42 können der Komfortwert 43 und der Einfederweg 44 bewertet oder gewichtet werden und hieraus ein optimales Stellsignal 8 gemäß der Kostenfunktion 42 erzeugt werden. Hierbei kann die Fahrgeschwindigkeit 19 ebenfalls berücksichtigt werden. Der Komfortwert 43 kann beispielsweise eine hinzunehmende oder zu erwartende Beschleunigung und/oder die Ableitung einer Beschleunigung, d.h. den Ruck, angeben.

Die Steuervorrichtung 9 versucht insgesamt durch die Dämpferregelung, die Bewegung und Beschleunigung des Aufbaus 3 zu minimieren.

Prinzipiell ist aber nicht die Bewegung selbst für den Diskomfort verantwortlich, sondern die Änderung der Bewegung, d.h. die Beschleunigung und wiederum die Ableitung dieser, der Ruck. Die Aufbaubewegung wird beim Überrollen der zurückliegenden Fahrbahn ausgelöst, verursacht aber auch beim Überrollen der zukünftigen Fahrbahn Diskomfort. Der Diskomfort, d.h. die Beschleunigung und/oder der Ruck, ist dann besonders groß, wenn die Bewegung des Aufbaus nicht zum Höhenprofil der Straße passt. Z.B. zwingt auf der einen Seite eine plötzlich ansteigende Straße das sich horizontal bewegende Fahrzeug zwangsläufig zu einer Bewegungsänderung.

Das Problem für einen Regler ohne Vorausschau oder Preview ist, dass keine Information vorhanden ist, welches Höhenprofil 12 in Zukunft überrollt wird. Damit ist nicht bekannt, welche Geschwindigkeit der Aufbau in Zukunft haben sollte.

Durch die Steuervorrichtung 9 erfolgt die Berechnung einer aktuellen vertikalen Aufbaugeschwindigkeit aus den Sensoren der Dämpferregelung, z.B. Aufbaubeschleunigungssignal und Radwegsignal. Dabei ist die Aufbaugeschwindigkeit der Vertikalbewegung 10 im hochfrequenten Bereich (insbesondere f > F2) das Integral der Aufbaubeschleunigung. Im tieffrequenten Bereich (insbesondere f < F1) ergibt sich die Aufbaugeschwindigkeit aus der Radgeschwindigkeit. Dieser Ansatz bietet gegenüber einem Ansatz, der sich nur auf die Aufbaubeschleunigungssensoren stützt, den Vorteil, dass keine abstrakte Bewegung des Fahrzeuges im Raum, sondern die Relativbewegung des Fahrzeuges zur Straße bewertet wird.

Die Ermittlung einer Sollgeschwindigkeit für den Aufbau kann auf Basis des vor dem Fahrzeug liegenden Höhenprofils 12 der Straße gemäß den Preview-Informationen erfolgen. Eine sehr einfache Möglichkeit zur Ermittlung der Sollgeschwindigkeit ist eine Strecke, die etwa der halben Aufbaueigenfrequenz entspricht, zu betrachten und die Sollgeschwindigkeit als Quotient von Höhenänderung und Zeit zu ermitteln.

Die Regelabweichung 41 der Aufbaugeschwindigkeit ergibt sich aus dem Vergleich von Soll- und Istgröße, falls ein linearer Regler verwendet wird.

Eine sinnvolle Ergänzung ist es, der Abweichung von der Sollgeschwindigkeit (virtuelle) Kosten zuzuordnen. Dies ermöglicht im Regler den Diskomfort, wie er durch den aktuellen Dämpfungseingriff verursacht würde, gegen den Diskomfort durch eine falsche Aufbaugeschwindigkeit bei Nicht-Eingriff abzuwiegen und damit ein Optimum zu finden. Notwendig wird dies, wenn zum Beispiel eine sehr starke Einfederung auf unebenem Untergrund zu einer Verletzung der Bodengrenzfläche führen kann.

Somit wird durch die Steuervorrichtung insbesondere eine Ermittlung der Aufbau-Istgeschwindigkeit als Relativgeschwindigkeit zur Straße über Radwegsensoren ermittelt. Die Berechnung einer Sollgeschwindigkeit für die vertikale Aufbaubewegung 10 ist ebenfalls realisiert. Die Ermittlung einer Regelabweichung 41 der vertikalen Aufbaugeschwindigkeit kann als Differenz von Soll- und Istgeschwindigkeit erfolgen.

Insgesamt zeigt das Beispiel, wie durch die Erfindung eine Berechnung der Vertikalgeschwindigkeit eines Fahrzeuges mit Vorausschaufunktion erfolgen kann.

**Bezugszeichenliste**

| | | | |
|---|---|---|---|
| 1 | Kraftfahrzeug | 23 | Sensoreinheit |
| 2 | Fahruntergrund | 24 | Sensorsignal |
| 3 | Aufbau | 25 | Elementen |
| 4 | Fahrwerk | 25 | Schätzeinrichtung |
| 5 | Rad | 26 | Sollwertermittlung |
| 6 | Schwingungsdämpfer | 27 | Regelungsverstärkung |
| 7 | Relativbewegung | 28 | Unterschiedsermittlung |
| 8 | Stellsignal | 29 | Integration |
| 9 | Steuervorrichtung | 30 | Aufbaubewegungssignal |
| 10 | Aufbaubewegung | 31 | Ableitung |
| 11 | Sollwertsignal | 32 | Radbewegungssignal |
| 12 | Höhenprofil | 33 | Filtereinheit |
| 13 | Erfassungseinrichtung | 34 | Filtereinheit |
| 14 | Straßenabschnitt | 35 | Filtercharakteristik |
| 15 | Kamera | 36 | Filtercharakteristik |
| 16 | Erfassungsbereich | 37 | Betragsgänge |
| 17 | Analyseeinrichtung | 39 | Übergangsbereich |
| 18 | Bilddaten | 40 | Überlagerung |
| 19 | Fahrgeschwindigkeit | 41 | Regelabweichung |
| 20 | Istwertsignal | 42 | Kostenfunktion |
| 21 | Sensoreinheit | 43 | Komfortwert |
| 22 | Sensorsignal | 44 | Einfederweg |

## Patentansprüche

1. Verfahren zum Regeln einer Dämpferhärte eines Schwingungsdämpfers (6) eines Rades (5) eines Kraftfahrzeugs (1), wobei durch eine Steuervorrichtung (9) des Kraftfahrzeugs (1):
- aus einem ersten Sensorsignal (22) einer ersten Sensoreinheit (21), welche bewegungsfest mit einem Aufbau (3) des Kraftfahrzeugs (1) verbunden ist, ein Aufbaubewegungssignal (30) erzeugt wird,
- aus einem zweiten Sensorsignal (24) einer zweiten Sensoreinheit (23), die eine Radposition des Rades (5) bezüglich des Aufbaus (3) erfasst, ein Radbewegungssignal (32) erzeugt wird,
- auf der Grundlage des Aufbaubewegungssignals (30) und des Radbewegungssignals (32) ein Geschwindigkeitssignal (20), das eine Geschwindigkeit des Aufbaus (3) beschreibt, erzeugt wird, und
- anhand des Geschwindigkeitssignals (20) ein Stellsignal (8) zum Einstellen der Dämpferhärte erzeugt wird,
wobei das Aufbaubewegungssignal (30) mittels einer eine Hochpasscharakteristik oder Bandpasscharakteristik aufweisenden ersten Filtereinheit (33) und/oder das Radbewegungssignal (32) mittels einer eine Tiefpasscharakteristik aufweisenden zweiten Filtereinheit (34) gefiltert wird,
**dadurch gekennzeichnet, dass**
mittels des Stellsignals (8) eine Vertikalgeschwindigkeit des Aufbaus (3) auf einen aktuellen Wert eines Sollwertsignals (11) eingeregelt wird und das Geschwindigkeitssignal (20) als ein Istwertsignal (20) für die Regelung verwendet wird,
wobei das Stellsignal (8) aus einem Unterschied (41) zwischen dem Istwertsignal (20) und dem Sollwertsignal (11) auf der Grundlage einer Kostenfunktion (42) ermittelt wird, wobei durch Kostenfunktion (42) ein sich durch eine Änderung der Vertikalgeschwindigkeit ergebender Ruck im Aufbau (3) des Kraftfahrzeugs (1) in Bezug auf einen Komfortwert (43) einerseits und einen Fahrsicherheitswert und/oder einen resultierenden Einfederweg (44) des Schwingungsdämpfers (6) andererseits bewertet wird,
wobei bei der Kostenfunktion (42) die Bewertung geschwindigkeitsabhängig ist.

2. Verfahren nach Anspruch 1, wobei als erstes Sensorsignal (22) ein Beschleunigungssignal eines Beschleunigungssensors, der eine Beschleunigung des Aufbaus (3) in vertikaler Richtung erfasst, empfangen wird.

3. Verfahren nach einem der vorhergehenden Ansprüche, wobei als das zweite Sensorsignal (24) ein Wegsignal eines Radwegsensors, der einen Einfederweg des Schwingungsdämpfers (6) erfasst, empfangen wird.

4. Verfahren nach einem der vorhergehenden Ansprüche, wobei eine Grenzfrequenz (F1) der zweiten Filtereinheit (34) kleiner als eine untere Grenzfrequenz (F2) der ersten Filtereinheit (33) ist.

5. Verfahren nach Anspruch 4, wobei die Grenzfrequenz (F1) der zweiten Filtereinheit (34) in einem Bereich von 0,5 Hz bis 5 Hz liegt.

6. Verfahren nach einem der Ansprüche 4 oder 5, wobei zwischen den Grenzfrequenzen (F1, F2) der beiden Filtereinheiten (33, 34) ein Übergangsbereich (39) ausgebildet ist, in welchem zwischen einem jeweiligen Betragsgang (37, 38) der ersten Filtereinheit (33) und der zweiten Filtereinheit (34) übergeblendet wird.

7. Verfahren nach einem der vorhergehenden Ansprüche, wobei das Sollwertsignal (11) anhand eines Höhenprofils (12) eines vor dem Kraftfahrzeug (1) liegenden Fahruntergrunds (2) festgelegt wird und das Höhenprofil (12) mittels einer Erfassungseinheit (13) erfasst wird.

8. Steuervorrichtung (9) für einen jeweiligen in der Dämpferhärte einstellbaren Schwingungsdämpfer (6) zumindest eines Rades (5) eines Kraftfahrzeugs (1), wobei die Steuervorrichtung (1) eine Prozessoreinrichtung aufweist,
und wobei die Steuervorrichtung (9) Mittel zum Empfangen eines ersten Sensorsignals (22) einer ersten, bewegungsfest mit einem Aufbau (3) des Kraftfahrzeugs (1) verbundenen Sensoreinheit (21) und pro Rad (5) eines zweiten Sensorsignals (24) einer zweiten, eine Radposition bezüglich des Aufbaus (3) erfassenden Sensoreinheit (23) umfasst, wobei die Steuervorrichtung (9) Mittel zur Ausgabe eines Stellsignals (8) pro Rad (5) zum Einstellen der Dämpferhärte an den jeweiligen Schwingungsdämpfer (6) des Rads (5) umfasst,
**dadurch gekennzeichnet, dass**
die Steuervorrichtung (9)Mittel zur Ausführung des Verfahrens nach einem der vorhergehenden Ansprüche pro Rad (5) umfasst.

9. Kraftfahrzeug (1) mit Rädern (5), die jeweils einen in der Dämpferhärte einstellbaren Schwingungsdämpfer (6) aufweisen, sowie mit einer ersten Sensoreinheit (21), welche bewegungsfest mit einem Aufbau (3) des Kraftfahrzeug (1) verbunden ist, und pro Rad (5) mit jeweils einer zweiten Sensoreinheit (23), die eine Radposition des Rades (5) bezüglich des Aufbaus (3) erfasst,
**dadurch gekennzeichnet, dass**
eine Steuervorrichtung (9) nach Anspruch 8 bereitgestellt ist.

## Claims

1. Method for regulating a damper hardness of a vibration damper (6) of a wheel (5) of a motor vehicle (1), wherein a control device (9) of the motor vehicle (1):
- generates a structure movement signal (30) from a first sensor signal (22) of a first sensor unit (21), which is connected in a fixed manner to a structure (3) of the motor vehicle (1),
- generates a wheel movement signal (32) from a second sensor signal (24) of a second sensor unit (23), which detects a wheel position of the wheel (5) relative to the structure (3),
- generates, on the basis of the structure movement signal (30) and the wheel movement signal (32), a speed signal (20), which describes a speed of the structure (3), and
- generates, on the basis of the speed signal (20), an actuating signal (8) for adjusting the damper hardness,
wherein the structure movement signal (30) is filtered by means of a first filter unit (33) having a highpass characteristic or bandpass characteristic and/or the wheel movement signal (32) is filtered by means of a second filter unit (34) having a lowpass characteristic,
**characterized in that**
a vertical speed of the structure (3) is adjusted to a current value of a setpoint signal (11) by means of the actuating signal (8) and the speed signal (20) is used as an actual-value signal (20) for the regulation,
wherein the actuating signal (8) is determined from a difference (41) between the actual-value signal (20) and the setpoint signal (11) on the basis of a cost function (42), wherein a jerk in the structure (3) of the motor vehicle (1) resulting from a change in the vertical speed in relation to a comfort value (43) on the one hand and in relation to a driving safety value and/or a resulting jounce path (44) of the vibration damper (6) on the other hand is evaluated by a cost function (42),
wherein in the case of the cost function (42), the evaluation is speed-dependent.

2. Method according to Claim 1, wherein an acceleration signal of an acceleration sensor, which detects an acceleration of the structure (3) in the vertical direction, is received as the first sensor signal (22).

3. Method according to one of the preceding claims, wherein a displacement signal of a wheel displacement sensor, which detects a jounce path of the vibration damper (6), is received as the second sensor signal (24).

4. Method according to one of the preceding claims, wherein a frequency limit (F1) of the second filter unit (34) is lower than a lower frequency limit (F2) of the first filter unit (33).

5. Method according to Claim 4, wherein the frequency limit (F1) of the second filter unit (34) lies within a range of 0.5 Hz to 5 Hz.

6. Method according to one of Claims 4 or 5, wherein a transition range (39) is formed between the frequency limits (F1, F2) of the two filter units (33, 34), in which transition range there is an overlap between a magnitude plot (37, 38) of the first filter unit (33) and that of the second filter unit (34).

7. Method according to one of the preceding claims, wherein the setpoint signal (11) is determined on the basis of a height profile (12) of a driving surface (2) lying ahead of the motor vehicle (1) and the height profile (12) is acquired by means of a detection unit (13).

8. Control device (9) for a vibration damper (6), in each case adjustable in damper hardness, of at least one wheel (5) of a motor vehicle (1), wherein the control device (1) has a processor device,
and wherein the control device (9) comprises means for receiving a first sensor signal (22) from a first sensor unit (21) connected in a fixed manner to a structure (3) of the motor vehicle (1) and, per wheel (5), a second sensor signal (24) from a second sensor unit (23) detecting a wheel position relative to the structure (3), wherein the control device (9) comprises means for outputting an actuating signal (8) per wheel (5) for adjusting the damper hardness at the respective vibration damper (6) of the wheel (5),
**characterized in that**
the control device (9) comprises means per wheel (5) for carrying out the method according to one of the preceding claims.

9. Motor vehicle (1) with wheels (5), each of which having a vibration damper (6) with adjustable damper hardness, as well as with a first sensor unit (21), which is connected to a structure (3) of the motor vehicle (1) in a fixed manner, and per wheel (5) with a respective second sensor unit (23), which detects a wheel position of the wheel (5) relative to the structure (3),
**characterized in that**
a control device (9) according to Claim 8 is provided.

## Revendications

1. Procédé de régulation de la dureté d'amortissement d'un amortisseur de vibrations (6) d'une roue (5) d'un véhicule automobile (1), dans lequel, par le biais d'un dispositif de commande (9) du véhicule automobile (1) :
- un signal de mouvement de carrosserie (30) est produit à partir d'un premier signal de détection (22) d'une première unité de détection (21), qui est reliée solidaire en mouvement à une carrosserie (3) du véhicule automobile (1),
- un signal de mouvement de roue (32) est produit à partir d'un second signal de détection (24) d'une seconde unité dse détection (23), qui détecte une position de roue de la roue (5) par rapport à la carrosserie (3),
- un signal de vitesse (20), qui décrit une vitesse de la carrosserie (3) est produit sur la base du signal de mouvement de carrosserie (30) et du signal de mouvement de roue (32) et
- un signal de réglage (8) permettant de régler la dureté d'amortissement est produit au moyen du signal de vitesse (20),
dans lequel le signal de mouvement de carrosserie (30) est filtré au moyen d'une première unité de filtrage (33) présentant une caractéristique de filtrage passe-haut ou une caractéristique de filtrage passe-bande et/ou le signal de mouvement de roue (32) est filtré par une seconde unité de filtrage (34) présentant une caractéristique de filtrage passe-bas,
**caractérisé en ce**
**qu**'une vitesse verticale de la carrosserie (3) est réglée au moyen du signal de réglage (8) sur une valeur réelle d'un signal de valeur prescrite (11) et le signal de vitesse (20) est utilisé comme un signal de valeur effective (20) pour la régulation,
dans lequel le signal de réglage (8) est déterminé à partir d'une différence (41) entre le signal de valeur effective (20) et le signal de valeur prescrite (11) sur la base d'une fonction de coût (42), dans lequel, par le biais de la fonction de coût (42), une saccade se produisant par le biais d'un changement de la vitesse verticale dans la carrosserie (3) du véhicule automobile (1) est évaluée par rapport à une valeur de confort (43) d'une part et une valeur de sécurité de conduite et/ou une courbe de suspension (44) résultante de l'amortisseur de vibrations (6) d'autre part,
dans lequel, pour la fonction de coût (42), l'évaluation est fonction de la vitesse.

2. Procédé selon la revendication 1, dans lequel, en guise de premier signal de détection (22), un signal d'accélération d'un accéléromètre, qui détecte une accélération de la carrosserie (3) dans la direction verticale, est reçu.

3. Procédé selon l'une quelconque des revendications précédentes, dans lequel, en guise de second signal de détection (24), un signal de déplacement d'un capteur de déplacement de roue, qui détecte une course de suspension de l'amortisseur de vibrations (6), est reçu.

4. Procédé selon l'une quelconque des revendications précédentes, dans lequel une fréquence limite (F1) de la seconde unité de filtrage (34) est inférieure à une fréquence limite inférieure (F2) de la première unité de filtrage (33).

5. Procédé selon la revendication 4, dans lequel la fréquence limite (F1) de la seconde unité de filtrage (34) se situe dans une plage de 0,5 Hz à 5 Hz.

6. Procédé selon l'une des revendications 4 ou 5, dans lequel, entre les fréquences limites (F1, F2) des deux unités de filtrage (33, 34), une zone de transition (39) est conçue, dans laquelle un enchaînement est créé entre une courbe respective (37, 38) de la première unité de filtrage (33) et de la seconde unité de filtrage (34).

7. Procédé selon l'une quelconque des revendications précédentes, dans lequel le signal de valeur prescrite (11) est défini au moyen d'un profil de hauteur (12) d'une surface de roulement (2) située devant le véhicule automobile (1) et le profil de hauteur (12) est détecté au moyen d'une unité de détection (13).

8. Dispositif de commande (9) pour un amortisseur de vibrations (6) respectif, ayant une dureté d'amortissement réglable, d'au moins une roue (5) d'un véhicule automobile (1), dans lequel le dispositif de commande (1) présente un dispositif formant processeur,
et dans lequel le dispositif de commande (9) comprend un moyen destiné à la réception d'un premier signal de détection (22) d'une première unité de détection (21) reliée solidaire en mouvement à une carrosserie (3) du véhicule automobile (1) et, par roue (5), d'un second signal de détection (24) d'une second unité de détection (23) qui détecte une position de roue par rapport à la carrosserie (3), dans lequel le dispositif de commande (9) comprend un moyen destiné à l'émission d'un signal de réglage (8) par roue (5) pour le réglage de la dureté d'amortissement au niveau de l'amortisseur de vibrations (6) respectif de la roue (5),
**caractérisé en ce**
**que** le dispositif de commande (9) comprend un moyen par roue (5) destiné à mettre en oeuvre le procédé selon l'une quelconque des revendications précédentes.

9. Véhicule automobile (1) comprenant des roues (5), qui présentent respectivement un amortisseur de vibrations (6), dont la dureté d'amortissement est réglable, ainsi qu'une première unité de détection (21), qui est reliée solidaire en mouvement avec une carrosserie (3) du véhicule automobile (1) et, par roue (5) respectivement une seconde unité de détection (23), qui détecte une position de roue de la roue (5) par rapport à la carrosserie (3),
**caractérisé en ce**
**qu**'un dispositif de commande (9) selon la revendication 8 est mis à disposition.
